Europäisches Patentamt

European Patent Office

Office européen des brevets

(19)

(11) Veröffentlichungsnummer: **0 005 776**
**B1**

(12) **EUROPÄISCHE PATENTSCHRIFT**

(45) Veröffentlichungstag der Patentschrift:
28.07.82

(51) Int. Cl.³: **B 31 B 23/74,** B 29 C 27/02

(21) Anmeldenummer: 79101532.4

(22) Anmeldetag: 21.05.79

(54) Vorrichtung zum Herstellen von Kunststoffbeuteln mit druckknopfartigen Verschlussleisten.

(30) Priorität: 07.06.78 DE 2824989

(43) Veröffentlichungstag der Anmeldung:
12.12.79 Patentblatt 79/25

(45) Bekanntmachung des Hinweises auf die Patenterteilung:
28.07.82 Patentblatt 82/30

(84) Benannte Vertragsstaaten:
BE FR GB IT

(56) Entgegenhaltungen:
US-A-2 816 400
US-A-3 616 042

(73) Patentinhaber: MINIGRIP EUROPE GMBH, Heilbronner Strasse 43, D-7000 Stuttgart 1 (DE)

(72) Erfinder: Schulze, Ehrhart, Königsberger Strasse 11, D-7012 Fellbach (DE)

(74) Vertreter: Hoeger, Stellrecht & Partner, Uhlandstrasse 14c, D-7000 Stuttgart 1 (DE)

EP 0 005 776 B1

Vorrichtung zum Herstellen von Kunststoffbeuteln mit druckknopfartigem Verschlussleisten

Die Erfindung betrifft eine Vorrichtung zum Herstellen von Kunststoffbeuteln aus mindestens einer doppellagigen thermoplastischen Folienbahn, deren beide Lagen auf den einander zugekehrten Innenrändern zur Bildung eines druckknopfartigen Verschlusses der Beutelöffnungen angeformte Schliessleisten aufweisen, mit einer Fördervorrichtung, die die Folienbahn einer Schweissstation zuführt, in der eine quer zur Förderrichtung verlaufende Schweissleiste durch Trennschweissungen die einzelnen Beutel von der Folienbahn abtrennt.

Beutel, die an ihrer Öffnung mit angeformten druckknopfartig zusammenwirkenden Schliessleisten versehen sind, sind auch unter der Bezeichnung «Minigrip-Beutel» bekannt. Von den beiden druckknopfartig zusammenwirkenden Schliessleisten bildet der konvexe Teil eine Rippenleiste und der konkave Teil eine Nutenleiste, so dass beim Zusammendrücken der beiden Schliessleisten die Rippenleiste in die Nutenleiste eingreift.

Das Ausgangsmaterial für die Herstellung solcher Beutel ist ein extrudierter Schlauch, auf dessen Innenseite die Schliessleisten beim Extrudieren erzeugt werden. Die kurze Seite zwischen den Schliessleisten wird vor dem Herstellen der Beutel aufgeschnitten, so dass zwischen jeder Schliessleiste und der Schnittkante ein ein Griffstück bildender Randstreifen entsteht. Der so aufgeschnittene Schlauch wird im allgemeinen als Halbschlauch bezeichnet.

Beim Herstellen der Beutel wird dieser Halbschlauch so flach zusammengedrückt, dass die Schliessleisten ineinandergreifen. Dann wird dieser so zusammengedrückte Halbschlauch in die Schweissstation eingeführt, in der er durch die quer zur Förderrichtung und damit quer zur Längsachse des Halbschlauches verlaufende Schweissleiste durch Trennschweissungen in die einzelnen Beutel aufgeteilt wird.

Bei Folienbahnen ohne Schliessleisten ist der Trennschweissvorgang ausserordentlich kurz, so dass bei dünnen Folien 250 Schweissungen pro Minute möglich sind.

Bei Folienbahnen mit Schliessleisten muss beim Trennschweissvorgang die Werkstoffanhäufung im Bereich der Schliessleisten durchgetrennt werden. Der Schmelzvorgang erfordert daher erheblich mehr Zeit, so dass nur eine wesentlich geringere Anzahl von Beuteln in der Minute geschweisst werden kann.

Um die Leistungen der eingangs genannten Vorrichtung zum Herstellen von Kunststoffbeuteln mit Verschlussleisten zu erhöhen, ist es bekannt, die Schliessleisten durch beheizte Pressstempel oder mittels Ultraschall in einer der Schweissstation vorgelagerten Station zu verformen, damit die Schliessleisten eine schneller durchschweissbare Dicke erhalten. Weitere bekannte Versuche bestehen darin, durch eine Veränderung des Schneidenwinkels der Trennschweissleiste den Trennschneidvorgang im Bereich der Schweissleiste selbst zu verkürzen.

Alle diese Massnahmen sind jedoch unbefriedigend und reichen nicht dazu aus, die Minutenleistung der Vorrichtung wesentlich zu verbessern.

Der Erfindung liegt die Aufgabe zugrunde, eine Vorrichtung zum Herstellen von Kunststoffbeuteln mit druckknopfartigen Verschlussleisten zu schaffen, die eine mit den Vorrichtungen zum Herstellen von Kunststoffbeuteln ohne Schliessleisten vergleichbare Minutenleistung haben.

Diese Aufgabe ist bei einer Vorrichtung der eingangs genannten Art gemäss der Erfindung dadurch gelöst, dass eine Fräseinrichtung vorhanden ist, die, in der Förderrichtung der Folienbahn gesehen, vor der Schweissstation angeordnet und mindestens für den Eingriff zwischen die beiden Innenränder der beiden Folien vorgesehen ist, und die zum Abfräsen der Schliessleisten mit einem Fräswerkzeug versehen ist und aus einer unwirksamen in eine wirksame Stellung und zurück bewegbar ist, in der das Fräswerkzeug die Schliessleisten abfräst, und dass eine Betätigungsvorrichtung für die Fräseinrichtung vorhanden ist, die diese in ihre wirksame Stellung bewegt, wenn sich die für das Trennschweissen vorgesehene Stelle der Folienbahn an der Fräseinrichtung befindet.

Dadurch wird die Möglichkeit geschaffen, die Schliessleisten im Trennschweissbereich mindestens zum grössten Teil wegzufräsen, so dass der Trennschweissvorgang im günstigsten Fall durch die Schliessleisten überhaupt nicht oder nur geringfügig behindert wird. Mit der erfindungsgemässen Vorrichtung können daher Kunststoffbeutel mit druckknopfartigen Verschlussleisten mit der gleichen oder mit einer nur geringfügig verringerten Minutenleistung hergestellt werden wie Beutel ohne Schliessleisten.

Bei den Vorrichtungen zum Herstellen von Kunststoffbeuteln aus einer doppellagigen thermoplastischen Folienbahn durch Trennschweissen kann die Folienbahn mit einer gleichbleibenden, stetigen Geschwindigkeit oder aber auch intermittierend zugeführt werden. Im erstgenannten Fall wird für den Trennschweissvorgang eine mit ungleichmässiger Geschwindigkeit umlaufende Schweissleiste benutzt, die sich nach dem Schweissvorgang mit beschleunigter Geschwindigkeit von der Folienbahn entfernt. Solche Vorrichtungen können gemäss der Erfindung ausgebildet werden, wobei dann das Fräswerkzeug nur so kurz mit der Folienbahn in Berührung gebracht wird, dass nur ein ganz kurzes Stück der Schliessleisten an der geplanten Schweissstelle abgefräst wird.

Bei einer die Folienbahn intermittierend fördernden Fördervorrichtung kann bei einer vorteilhaften Ausführungsform die Fräseinrichtung ein dauernd umlaufendes Fräswerkzeug aufweisen, das im Hohlraum eines Dornes drehbar gelagert ist, der zwischen die beiden Innenränder der Folien einführbar ist, wobei die Fräseinrichtung jeweils in zwei einander diametral gegenüberliegenden und im Winkel zueinander versetzten Teilen ihres Umfanges Führungsnuten und Durchbrüche für die Schliessleisten aufweist, um ihre Achse drehbar gelagert ist und von der Betätigungsvorrichtung während der Stillstandsphase des Vorschubes aus ihrer unwirksamen Stellung, in der die Schliessleisten in die Führungsnuten eingreifen, in ihre wirksame Stellung und zurück drehbar ist, in der die Schliessleisten durch die Durchbrüche in den Wirkungsbereich des Fräswerkzeuges eingreifen. Hierbei ist die Fräseinrichtung in einem Abstand von der Schweisskante der Schweissleiste angeordnet, der der Breite der Beutel oder einem ganzzahligen Vielfachen dieser entspricht.

Das Fräswerkzeug kann hierbei so schnell umlaufen, dass eine gründliche Abfräsung der Schliessleisten an der Schweissstelle gewährleistet ist.

Die Erfindung ist in der folgenden Beschreibung an Hand eines in den Zeichnungen dargestellten Ausführungsbeispieles einer Vorrichtung zum Herstellen von Kunststoffbeuteln mit druckknopfartigen Verschlussleisten im einzelnen erläutert. Die Verschlussleisten sind dabei gegenüber der Foliendicke um ein Vielfaches vergrössert dargestellt, um die Wirkung der Erfindung zu verdeutlichen. Es zeigen:

Fig. 1 eine abgebrochen dargestellte perspektivische Ansicht eines quer durchgeschnittenen, die Folienbahn zur Herstellung von Kunststoffbeuteln mit Schliessleisten darstellenden Schlauches;

Fig. 2 eine schematische Seitenansicht des Ausführungsbeispieles der erfindungsgemässen Vorrichtung zum Herstellen von Kunststoffbeuteln aus dem Schlauch nach Fig. 1;

Fig. 3 einen vertikalen Schnitt der Fräseinrichtung nach der Linie III–III in Fig. 2;

Fig. 4 und 5 Schnitte nach der Linie IV–IV in Fig. 3 in vergrösserter Darstellung, die die Fräseinrichtung in ihrer wirksamen bzw. unwirksamen Stellung zeigen;

Fig. 6 einen vergrösserten Teilausschnitt aus Fig. 3, aus dem der Eingriff der Schliessleisten in den Hohlraum des Dornes der Fräseinrichtung ersichtlich ist.

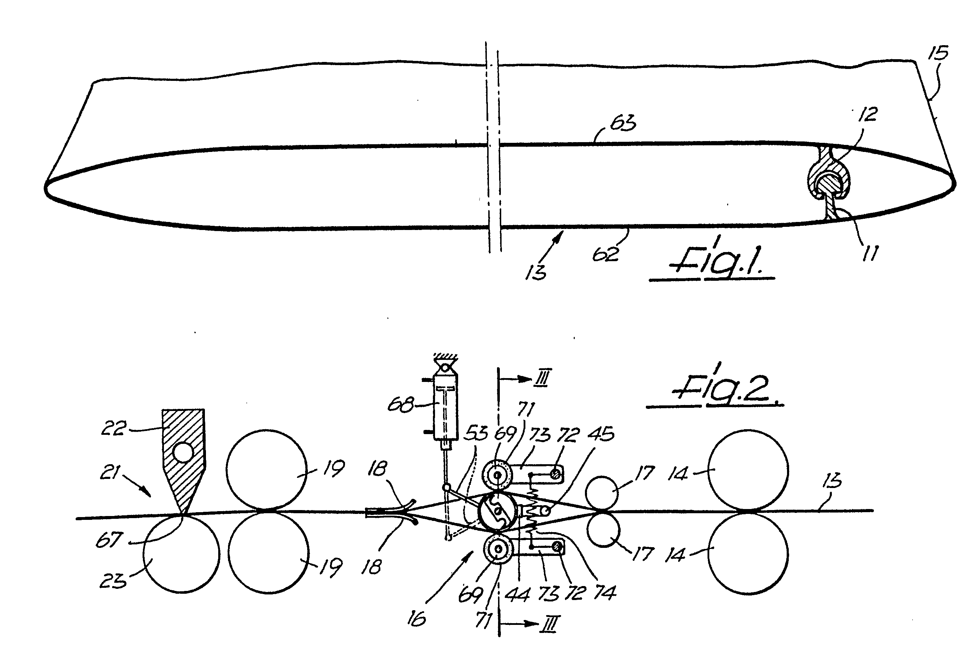

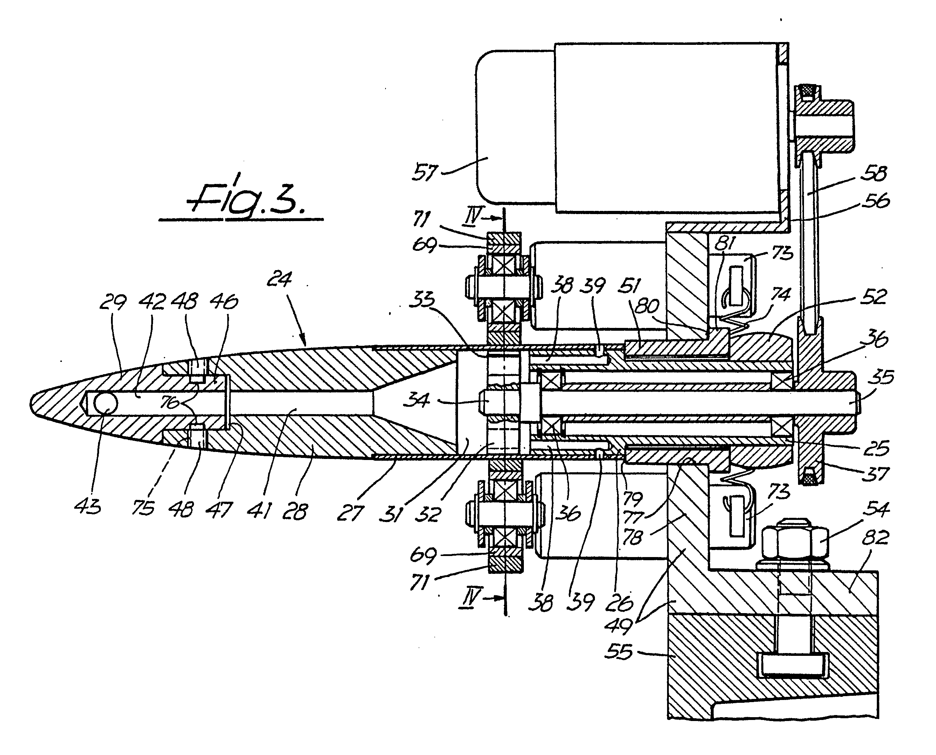

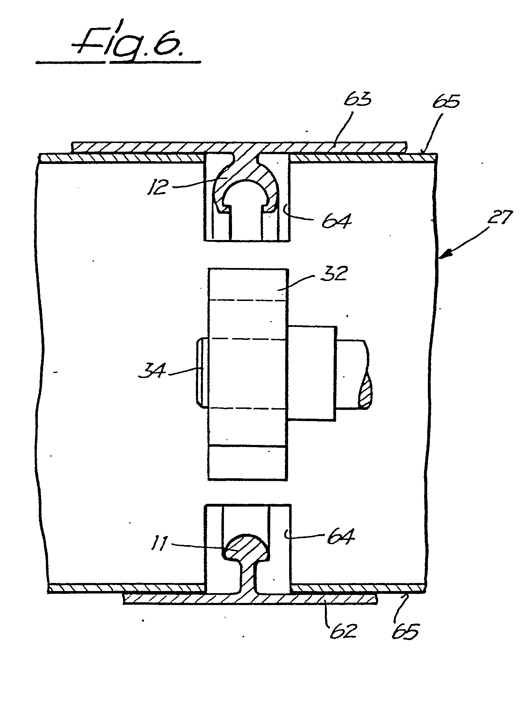

Die doppellagige thermoplastische Folienbahn, aus der Kunststoffbeutel mit druckknopfartigen Schliessleisten mit der im folgenden beschriebenen Vorrichtung hergestellt werden sollen, wird bei dem in den Fig. 2 bis 6 dargestellten Ausführungsbeispiel durch den in Fig. 1 dargestellten, aus einem thermoplastischen Kunststoff durch Extrudieren hergestellten Schlauch gebildet, an dessen Innenseite beim Extrudieren Schliessleisten 11 und 12 angeformt werden. Für das druckknopfartige Zusammenwirken dieser beiden Schliessleisten bildet die Schliessleiste 11 den konvexen Teil. Diese kann daher auch als Rippenleiste bezeichnet werden. Die Schliessleiste 12 bildet den konkaven Teil und kann daher auch als Nutenleiste bezeichnet werden. Die Ausbildung dieser Schliessleisten 11 und 12 ist allgemein bekannt, so dass sich eine nähere Beschreibung erübrigt. Wie bereits oben erwähnt, sind jedoch die Schliessleisten 11 und 12 gegenüber den wirklichen Verhältnissen um ein Vielfaches vergrössert dargestellt.

In Fig. 2 ist das Ausführungsbeispiel der erfindungsgemässen Vorrichtung schematisch als Seitenansicht dargestellt. Die vom Schlauch nach Fig. 1 gebildete Folienbahn 13 wird durch intermittierend angetriebene Vorschubwalzen 14 von einem in der Zeichnung nicht dargestellten Wickel abgezogen. Der in Fig. 1 dargestellte Schlauch wird hierbei längs der zwischen den beiden Schliessleisten 11 und 12 liegenden Schnittlinie 15 aufgeschnitten, so dass sich ein Halbschlauch bildet. Von den Vorschubwalzen 14 wird die Folienbahn 13 einer als Ganzes mit 16 bezeichneten Fräseinrichtung zugeführt, die an ihrem Eingang zwei Leitwalzen 17 aufweist, die die beiden Schliessleisten 11 und 12 im Eingriff miteinander halten. Am Ausgang der Fräseinrichtung 16 sind Kufen 18 vorgesehen, die die innerhalb der Fräseinrichtung an der Öffnung des Halbschlauches voneinander abgehobenen Folien so zusammenführen, dass die Schliessleisten wieder genau ineinandergreifen. Zu diesem Zweck sind in den Kufen zum Führen der durch die Schliessleisten entstehenden Verdickung in der Zeichnung nicht sichtbare Führungsnuten vorgesehen.

Der Fräseinrichtung 16 ist ein weiteres Paar von Vorschubwalzen 19 nachgeschaltet, die die Folienbahn 13 der als Ganzes mit 21 bezeichneten Schweissstation zuführen, die eine auf und ab bewegbare, quer zur Förderrichtung verlaufende Schweissleiste 22 aufweist, die mit einer gummierten Schweisswalze 23 in bekannter Weise zusammenwirkt. Ein in der Zeichnung nicht dargestellter Antrieb ist in bekannter Weise sowohl für den intermittierenden Antrieb der Vorschubwalzen 14 und 19 als auch für die Auf- und Abwärtsbewegung der Schweissleiste 22 vorgesehen, wobei diese Auf- und Abwärtsbewegung ebenfalls in bekannter Weise so mit dem intermittierenden Vorschub abgestimmt ist, dass die Schweissung immer während der Stillstandsphasen des intermittierenden Vorschubes erfolgt.

In der Schweissstation 21 werden die einzelnen Beutel durch Trennschweissen abgetrennt und anschliessend von einer in der Zeichnung nicht dargestellten, aus Förderbändern gebildeten Fördervorrichtung eines Beutelauslegers erfasst.

Die Fräseinrichtung 16 weist einen im einzelnen in Fig. 3 dargestellten Dorn 24 auf, der eine Bundhülse 25 mit einem Bund 26, ein zylindrisches Rohr 27, einen kegelartig geformten Körper 28 und einen Kopf 29 aufweist. Das Rohr 27 ist mit seinem einen Ende auf den Bund 26 der Bundhülse 25 und mit seinem anderen Ende auf das dickere Ende des kegelartigen Körpers 28 aufgesteckt und verbindet dadurch diese beiden Teile zu einem festen Körper. Hierbei umschliesst das Rohr 27 einen Hohlraum 31, in dem ein Fräswerkzeug 32 mit zwei Schneiden 33 so umläuft, dass sich die beiden Schneiden 33 längs der zylindrischen Innenwand des Rohres 27 bewegen. Das Fräswerkzeug 32 ist auf dem einen Ende 34 einer Welle 35 befestigt, die mittels Kugellagern 36 in der hier das Lagergehäuse für die Welle 35 bildenden Bundhülse 25 drehbar gelagert ist. Auf dem aus der Bundhülse herausragenden, dem Fräswerkzeug 32 abgekehrten Ende der Welle 35 ist eine Keilriemenscheibe 37 befestigt.

Der Hohlraum 31 ist durch Bohrungen 38 im Bund 26 der Bundhülse 25 und über auch durch das Rohr 27 hindurchgehende Radialbohrungen 39 mit der Aussenluft und durch eine Axialbohrung 41 im kegelartigen Körper 28 mit einer Axialbohrung 42 im Kopf 29 verbunden, die durch eine Radialbohrung 43 mit einem Anschluss 44 für eine Saugluftleitung 45 verbunden ist. Der Kopf 29 ist mit dem Körper 28 um die gemeinsame Achse drehbar verbunden. Zu diesem Zweck greift ein zylindrischer Ansatz 46 des Kopfes 29 in eine zylindrische axiale Aussparung 47 im Körper 28 ein. Für die drehbare Verbindung des Kopfes 29 mit dem Körper 28 sind im Körper 28 radiale Gewindebohrungen 75 vorgesehen, in die Gewindestifte 48 eingeschraubt sind, deren innere Enden in eine umlaufende Ringnut 76 des Ansatzes 46 eingreifen.

Der Dorn 24 ist in dem einen Schenkel 78 eines winkelförmigen Tragstückes 49 drehbar gelagert. Zu diesem Zweck greift in eine Bohrung 77 dieses Tragstückschenkels 78 eine Lagerbuchse 51, in der die Bundhülse 25 drehbar gelagert ist. Die Lagerbuchse 51 liegt mit ihrem einen Ende 79 am Bund 26 und mit der Flanschfläche 80 eines Bundes 81 an ihrem anderen Ende am äusseren Rand der Bohrung 77 an. Ein auf der Bundhülse 25 befestigtes Lagerauge 52 eines Hebels 53 (Fig. 2) liegt am äusseren Flansch des Bundes 81 an. Der zweite waagerecht angeordnete Schenkel 82 des Tragstückes 49 ist durch Schrauben 54 mit dem Maschinengestell 55 verbunden. An dem diesem Schenkel abgekehrten Ende des Tragstückes 49 ist mittels eines Winkels 56 ein Elektromotor 57 befestigt, der über einen Keilriemen 58, die Keilriemenscheibe 37 und damit über die Welle 35 das Fräswerkzeug 32 während des Betriebes mit einer ständig gleichbleibenden Drehzahl antreibt.

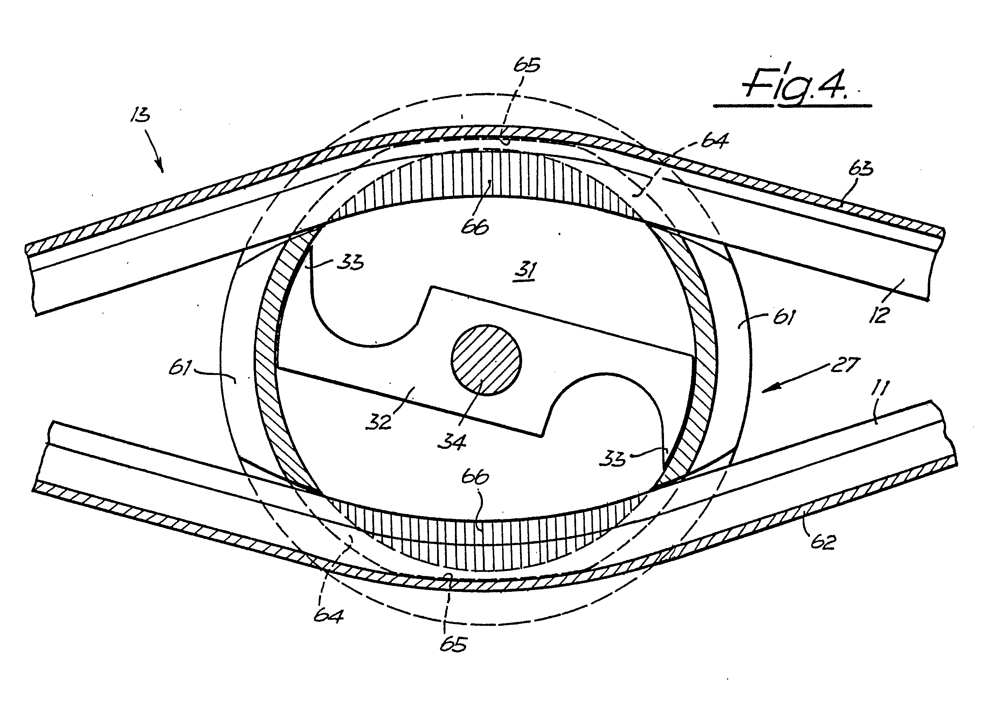

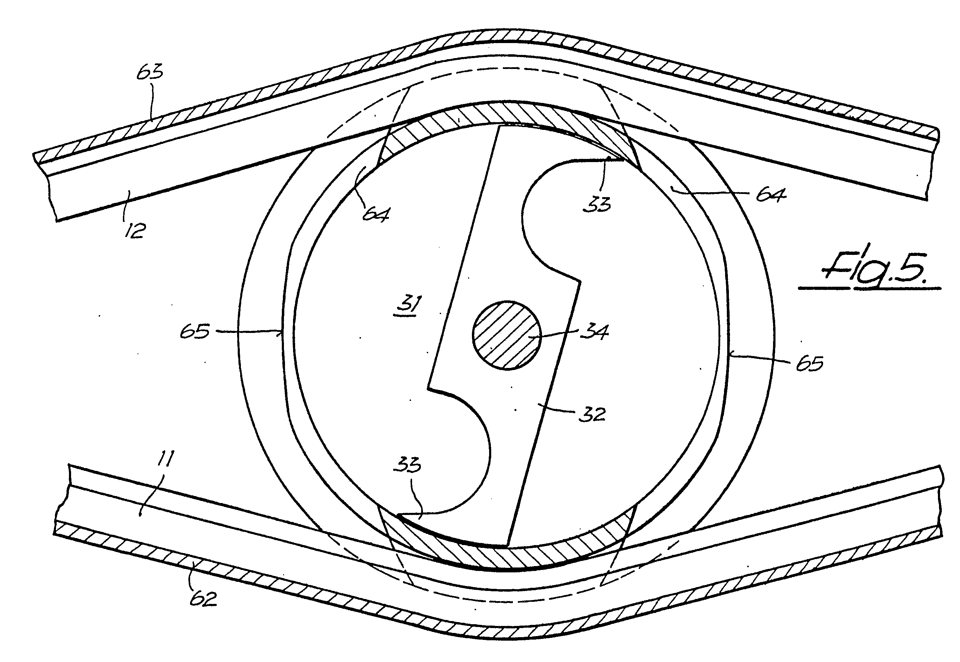

Wie das in den Fig. 4 und 5 näher dargestellt ist, weist das Rohr 27 in zwei einander diametral gegenüberliegenden Teilen seines Umfanges Führungsnuten 61 für die Schliessleisten 11 und 12 der beiden Folien 62 und 63 der Folienbahn 13 auf. Zwischen diesen Nuten 61 sind im Umfang des Rohres 27 Durchbrüche 64 ebenfalls für die Schliessleisten 11 und 12 vorgesehen, durch die die Schliessleisten in den Hohlraum 31 eingreifen und dadurch in den Bereich der Schneiden 33 des Fräswerkzeuges 32 kommen. Durch den Hebel 53 kann hierbei der Dorn 24 als Ganzes und damit auch das Rohr 27 aus der in Fig. 5 dargestellten Stellung, in der die Schliessleisten in die Nuten 61 eingreifen, in die in Fig. 4 dargestellte wirksame Stellung gedreht werden, in der die Schliessleisten 11 und 12 durch die Durchbrüche 64 in den Hohlraum 31 eingreifen. Im Bereich der Durchbrüche 64 ist die Aussenwandung des Rohres 27 zur Verdünnung der Wandstärke mit einer Abflachung 65 versehen. Durch diese Verdünnung der Wandstärke im Bereich der Durchbrüche 64 wird erreicht, dass die Schliessleisten fast mit ihrer ganzen Höhe in den Hohlraum 31 eingreifen und damit fast bis auf die einander zugekehrten Flächen der Folien 62 und 63 vom Fräswerkzeug 32 abgefräst werden können. Der beim Rotieren des Fräswerkzeuges 32 abgefräste Teil 66 der Schliessleisten 11 und 12 ist in der Fig. 4 schraffiert dargestellt.

Die Fräseinrichtung 16 ist so angeordnet, dass der Abstand der Achse der Welle 35 von der Schweisskante 67 der Schweissleiste 22 der Breite eines Beutels oder einem ganzzahligen Vielfachen dieser Breite entspricht.

Zum Schwenken des Hebels 53 und damit zum Drehen des Dornes 24 aus der in Fig. 5 dargestellten Stellung in die in Fig. 4 dargestellte wirksame Stellung der Fräseinrichtung und zurück, ist ein Druckluftzylinder 68 vorgesehen, der sofort bei Beginn der Stillstandsphase den Hebel 53 aus der in Fig. 2 strichpunktiert dargestellten Stellung, bei der sich das Rohr 27 des Dornes 24 in der in Fig. 5 dargestellten Stellung befindet, in die in Fig. 2 ausgezogen dargestellte Stellung bewegt, in der sich das Rohr 27 in der in Fig. 4 dargestellten Stellung befindet. Kurz vor dem Ende der Stillstandsphase wird dann der Hebel 53 wieder aus der in Fig. 3 ausgezogen dargestellten Stellung in die strichpunktiert dargestellte Stellung zurückbewegt, in der sich die Fräseinrichtung 16 in ihrer unwirksamen Stellung befindet.

Um einen sicheren Eingriff der Schliessleisten 11 und 12 sowohl in die Nuten 61 als auch insbesondere in die Durchbrüche 64 zu gewährleisten, sind oberhalb und unterhalb des Rohres 27 Rollen 69 vorgesehen, die mit einem Gummibelag 71 versehen sind und an den freien Enden von um Achsen 72 schwenkbaren Hebeln 73 drehbar gelagert sind. An den beiden Hebeln greift eine die Rollen 69 an das Rohr 27 andrückende Zugfeder 74 an.

Während des Betriebes wird die Folienbahn 13 durch die Vorschubwalzen 14 und 19 intermittierend der Schweissstation 21 zugeführt. Während der Vorschubphasen gleiten die Schliessleisten 11 und 12 durch die Führungsnuten 61 des Rohres 27, das sich dabei in der in Fig. 5 dargestellten Stellung befindet, so dass das Fräswerkzeug 32 unwirksam ist. Sofort nach Beginn der Stillstandsphase des intermittierenden Vorschubes wird der Dorn 24 und damit auch das Rohr 27 durch die vom Druckluftzylinder 68 und dem Hebel 53 gebildete Betätigungsvorrichtung aus der in Fig. 5 dargestellten Stellung in die in Fig. 4 dargestellte Stellung gedreht, in der die Schliessleisten 11 und 12 durch die Durchbrüche 64 in den Hohlraum 31 des Rohres 27 eingreifen, wo ihre in den Hohlraum eingreifenden Teile 66 von dem Fräswerkzeug 32 abgefräst werden, das dauernd mit gleichbleibender Drehzahl umläuft. Da dieses Abfräsen nur während der Stillstandsphasen des intermittierenden Vorschubes erfolgt, befinden sich die abgefrästen Teile der Schliessleisten 11 und 12 in einem Abstand voneinander, der genau der Breite der in der Schweissstation 21 abgeschweissten Beutel entspricht. Dadurch, dass sich hierbei die Achse der das Fräswerkzeug 32 tragenden Welle 35 in einem Abstand von der Schweisskante 67 der Schweissleiste 22 befindet, der einer Beutelbreite oder einem ganzzahligen Vielfachen derselben entspricht, wird erreicht, dass die Schweissung immer genau an derjenigen Stelle erfolgt, an der die Schliessleisten 11 und 12 am meisten abgefräst sind, so dass der Schweissvorgang durch die Schliessleisten praktisch nicht beeinträchtigt ist.

Die dargestellte Vorrichtung ist zum Herstellen von Kunststoffbeuteln mit druckknopfartigen Schliessleisten 11 und 12 aus einer halbschlauchförmigen Folienbahn 13 bestimmt, wie sie in Fig. 1 dargestellt ist. Es werden aber auch Kunststoffschläuche mit zwei Schliessleistenpaaren extrudiert. Ein solcher Schlauch wird zwischen den beiden Schliessleistenpaaren getrennt, so dass zwei spiegelbildlich nebeneinander liegende Halbschläuche gemäss Fig. 1 entstehen. Für solche Doppelfolienbahnen kann die dargestellte Vorrichtung sehr einfach dadurch abgewandelt werden, dass nach dem Zerschneiden des Schlauches in zwei Halbschläuche die so gebildeten beiden Folienbahnen etwas auseinandergeführt werden und dass dann zwei von einem mittleren Tragstück nach entgegengesetzten Seiten ragende Dorne 24 vorgesehen sind, die in die Öffnungen der ihnen zugekehrten Halbschläuche in der beschriebenen Weise eingreifen. Dadurch können dann gleichzeitig zwei Beutel im sogenannten Doppelnutzen hergestellt werden.

Ist der Schlauch mit zwei Schliessleistenpaaren so extrudiert, dass sich diese an diametral einander gegenüberliegenden Stellen des Schlauches befinden, dann wird der Schlauch durch eine Längstrennschweisseinrichtung in seiner Mitte in zwei Folienbahnen getrennt und bei diesem Trennschweissen werden die beiden Folien zu Beutelböden zusammengeschweisst. Es entstehen dann zwei Folienbahnen gemäss Fig. 1, die mit ihren Böden aneinanderliegen. Diese beiden Folienbahnen müssen dann mit einer der beschriebenen Vorrichtung entsprechenden Vorrichtung bearbeitet werden, bei der die Dorne gegeneinander gerichtet sind und in die nach aussen gerichteten Öffnungen der Halbschläuche eingreifen.

**Patentansprüche**

1. Vorrichtung zum Herstellen von Kunststoffbeuteln aus mindestens einer doppellagigen thermoplastischen Folienbahn (13), deren beide Lagen (62, 63) auf den einander zugekehrten Innenrändern zur Bildung eines druckknopfartigen Verschlusses der Beutelöffnungen angeformte Schliessleisten (11, 12) aufweisen, mit einer Fördervorrichtung (19), die die Folienbahn (13) einer Schweissstation (21) zuführt, in der eine quer zur Förderrichtung verlaufende Schweissleiste (22) durch Trennschweissungen die einzelnen Beutel von der Folienbahn (13) abtrennt, dadurch gekennzeichnet, dass eine Fräseinrichtung (16) vorhanden ist, die, in der Förderrichtung der Folienbahn (13) gesehen, vor der Schweissstation (21) angeordnet und mindestens für den Eingriff zwischen die beiden Innenränder der beiden Folien (62, 63) vorgesehen ist, und die zum Abfräsen der Schliessleisten (11, 12) mit einem Fräswerkzeug (32) versehen ist und aus einer unwirksamen (Fig. 5) in eine wirksame (Fig. 4) Stellung und zurück bewegbar ist, in der das Fräswerkzeug die Schliessleisten abfräst, und dass eine Betätigungsvorrichtung (53, 68) für die Fräseinrichtung vorhanden ist, die diese in ihre wirksame Stellung bewegt, wenn sich die für das Trennschweissen vorgesehene Stelle der Folienbahn an der Fräseinrichtung befindet.

2. Vorrichtung nach Anspruch 1, dadurch gekennzeichnet, dass die Fräseinrichtung (16) zum Abführen der Späne mit einer Absaugvorrichtung (41, 42, 45) versehen ist.

3. Vorrichtung nach Anspruch 1 oder 2, dadurch gekennzeichnet, dass bei einer die Folienbahn (13) intermittierend fördernden Fördervorrichtung (14, 19) die Fräseinrichtung (16) ein dauernd umlaufendes Fräswerkzeug (32) aufweist, das im Hohlraum (31) eines Dornes (24) drehbar gelagert ist, der zwischen die beiden Innenränder der Folien (62, 63) einführbar ist, dass die Fräseinrichtung jeweils in zwei einander diametral gegenüberliegenden und im Winkel zueinander versetzten Teilen ihres Umfanges Führungsnuten (61) und Durchbrüche (64) für die Schliessleisten (11, 12) aufweist, um ihre Achse drehbar gelagert ist und von der Betätigungsvorrichtung (53, 68) während der Stillstandsphase des Vorschubes aus ihrer unwirksamen Stellung, in der die Schliessleisten in die Führungsnuten (61) eingreifen, in ihre wirksame Stellung und zurück drehbar ist, in der die Schliessleisten (11, 12) durch die Durchbrüche (64) in den Wirkungsbereich des Fräswerkzeuges (32) eingreifen und dass die Fräseinrichtung (16) in einem Abstand von der Schweisskante (67) der Schweissleiste (22) angeordnet ist, der der Breite der Beutel oder einem ganzzahligen Vielfachen dieser entspricht.

4. Vorrichtung nach Anspruch 2 und 3, dadurch gekennzeichnet, dass der Dorn (24) an seinem freien Ende einen um die Dornachse drehbaren Kopf (29) aufweist, der mit einem Anschluss (44) für eine Saugluftleitung (45) zum Absaugen der Späne versehen ist, der über eine Axialbohrung (41, 42) mit dem Dornhohlraum (31) verbunden ist.

5. Vorrichtung nach Anspruch 3 oder 4, dadurch gekennzeichnet, dass die Fräseinrichtung (16) zur Anpassung an verschiedene Breiten der Beutel in der Vorschubrichtung der Folienbahn (13) verstellbar und feststellbar gelagert ist.

6. Vorrichtung nach einem der Ansprüche 3 bis 5, dadurch gekennzeichnet, dass die Aussenwandung des Dornes (24) in den Durchbrüchen (64) benachbarten Bereichen mit Abflachungen (65) versehen ist.

7. Vorrichtung nach einem der Ansprüche 3 bis 6, dadurch gekennzeichnet, dass das Fräswerkzeug (32) mindestens zwei vorzugsweise diametral einander gegenüberliegende Schneiden (33) aufweist, die längs der zylindrischen Innenwandung des Dornhohlraumes (31) umlaufen.

8. Vorrichtung nach einem der Ansprüche 1 bis 7, dadurch gekennzeichnet, dass zum Zusammenführen der beiden Folien (62, 63) am Ende der Fräseinrichtung (16) Kufen (18) vorgesehen sind, die im Bereich der Schliessleisten (11, 12) Nuten aufweisen.

9. Vorrichtung nach einem der Ansprüche 1 bis 8, dadurch gekennzeichnet, dass zum Andrücken der beiden Folien (62, 63) an die Fräseinrichtung federbelastete Andruckrollen (69) vorhanden sind.

10. Vorrichtung nach einem der Ansprüche 2 bis 9, dadurch gekennzeichnet, dass die Betätigungsvorrichtung einen am Dorn (24) befestigten Hebel (53) aufweist, an dem ein Druckluftzylinder (68) angreift.

**Claims**

1. Apparatus for producing plastic bags from at least one double-layered thermoplastic foil sheet (13) of which both layers (62, 63) comprise moulded closing ridges (11, 12) on the inner edges facing each other to form a push button-like closure of the bag openings, with a conveying apparatus (19) which supplies the foil sheet (13) to a welding station (21) in which a welded ridge (22) running transversely to the conveying direction separates the individual bags from the foil sheet (13) by separation weldings, characterized in that there is a milling device (16) which, seen in the conveying direction of the foil sheet, is arranged in front of the welding station (21) and is provided at least for the engagement between the two inner edges of the two foil layers (62, 63), and which is provided with a milling tool (32) to mill off the closing ridges (11, 12) and can be moved back from an inoperative (Fig. 5) to an operative (Fig. 4) position in which the milling tool mills off the closing ridges, and in that there is an actuating apparatus (53, 68) for the milling device which moves the latter into its operative position when the position of the foil sheet for the separation welding is located on the milling device.

2. Apparatus according to claim 1, characterized in that the milling device (16) is provided to remove the chips with a suction device (41, 42, 45).

3. Apparatus according to claim 1 or 2, characterized in that in a conveying apparatus (14, 19) which intermittently conveys the foil sheet (13) the milling device (16) comprises a continously rotating milling tool (32) which is rotatably mounted in the hollow chamber (31) of a mandrel (24) which can be inserted between the two inner edges of the foil layers (62, 63); in that the milling device in each case in two parts of its periphery diametrically opposite each other and offset at an angle to each other comprises guide grooves (61) and openings (64) for the closing ridges (11, 12), is rotatably mounted about its axis and can be rotated from the actuating apparatus (53, 68) during the standstill phase of the feed from its inoperative position, in which the closing ridges engage in the guide grooves (61), into its operative position and back, in which the closing ridges (11, 12) engage by openings (64) in the operating region of the milling tool (32) and in that the milling device (16) is arranged at a distance from the welding edge (67) of the welding ridge (22) which corresponds to the width of the bag or an integral multiple of the latter.

4. Apparatus according to claim 2 and 3, characterized in that the mandrel (24) comprises at its free end a head (29) which can be rotated about the mandrel axis, and is provided with a connection (44) for a suction air pipe (45) to extract the chips by suction, and is connected by means of an axial bore (41, 42) to the mandrel hollow chamber (31).

5. Apparatus according to claim 3 or 4, characterized in that the milling device (16) is adjustably and fixably mounted to adapt to the different widths of the bags in the feed direction of the foil sheet (13).

6. Apparatus according to one of claims 3 to 5, characterized in that the outer wall of the mandrel (24) is provided in the regions adjacent the openings (64) with flattened portions (65).

7. Apparatus according to one of claims 3 to 6, characterized in that the milling tool (32) comprises at least two preferably diametrically opposite cutting edges (33) which rotate along the cylindrical inner wall of the mandrel hollow chamber (31).

8. Apparatus according to one of claims 1 to 7, characterized in that to guide the two foil layers (62, 63) together ski-like guides (18) are provided at the end of the milling device (16) and comprise grooves in the region of the closing ridges (11, 12).

9. Apparatus according to one of claims 1 to 8, characterized in that to urge the two foil layers (62, 63) against the milling device there are springloaded pressure rollers (69).

10. Apparatus according to one of claims 2 to 9, characterized in that the actuation apparatus comprises a lever (53) which is fastened to the mandrel (24) and against which a compressed air cylinder (68) engages.

**Revendications**

1. Dispositif de préparation de sacs en substance synthétique à partir d'au moins une bande de feuille thermoplastique à double couche (13), dont les deux couches (62, 63) présentent, sur leurs bords internes mutuellement adjacents des baguettes de fermeture (11, 12) façonnées pour la formation d'une fermeture du type à pression des ouvertures de sac, comprenant un dispositif d'avance (19), que amène la bande (13) à une station de soudage (21), dans laquelle une barre de soudage (22) disposée transversalement au sens de l'avancement sépare, par des soudages séparateurs, les sacs individuels à partir de la bande (13), caractérisé en ce qu'il est prévu un dispositif de

**0005776**

fraisage (16) qui, vu dans le sens de l'avance de la bande (13), est agencé en amont de la station de soudage (21), est au moins prévu pour pénétrer entre les deux dords internes des deux feuilles (62, 63), est pourvu, pour le fraisage des baguettes de fermeture (11, 12), d'un outil de fraisage 32 et peut être déplacé à partir d'une position inactive (figure 5) dans une position active (figure 4), dans laquelle l'outil de fraisage fraise les baguettes de fermeture, et inversement, et en ce qu'il est prévu un dispositif d'actionnement (53, 68) du dispositif de fraisage, qui déplace ce dernier dans sa position active, lorsque l'emplacement de la bande, prévu pour le soudage séparateur, se trouve sur le dispositif de fraisage.

2. Dispositif suivant la revendication 1, caractérisé en ce que le dispositif de fraisage (16) est pourvu, pour l'évacuation des copeaux, d'un dispositif d'aspiration (41, 42, 45).

3. Dispositif suivant l'une ou l'autre des revendications 1 et 2, caractérisé en ce que, dans le cas d'un dispositif d'avance (14, 19) faisant progresser la feuille (13) de manière intermittente, le dispositif de fraisage (16) présente un outil de fraisage (32) qui tourne de manière permanente et qui est supporté de manière à pouvoir pivoter dans la cavité (31) d'un mandrin (24) qui peut être introduit entre les deux bordes internes des feuilles (62, 63), en ce que le dispositf de fraisage présente dans deux parties de son pourtour mutuellement diamétralement opposées et respectivement décalées d'un certain angle l'une par rapport à l'autre des rainures de guidage (61) et des passages (64) pour les baguettes de fermeture (11, 12), en ce qu'il est supporté de manière á pouvoir pivoter autour de son axe et est capable de pivoter, à l'aide du dispositif d'actionnement (53, 68), pendant la phase d'arrêt de l'avance, à partir de sa position inactive, dans laquelle les baguettes de fermeture pénètrent dans les rainures de guidage (61), jusque dans sa position active, dans laquelle les baguettes de fermeture (11, 12) pénètrent à travers les passages (64) dans la zone active de l'outil de fraisage (32), et inversement, et en ce que le dispositif de fraisage (16) est agencé à une distance de l'arête de soudage (67) de la barre de soudage (22), qui correspond à la largeur des sacs ou à un multiple entier de celle-ci.

4. Dispositif suivant l'une ou l'autre des revendications 2 et 3, caractérisé en ce que le mandrin (24) présente, à son extrémité libre, une tête (29) qui est capable de pivoter autour de l'axe du mandrin et qui est pourvue d'un raccord (44) pour un conduit à dépression (45) destiné à l'aspiration des copeaux, qui est relié à la cavité (31) du mandrin par l'intermédiaire d'un alésage axial (41, 42).

5. Dispositif suivant l'une ou l'autre des revendications 3 et 4, caractérisé en ce que le dispositif de fraisage (16) est, pour l'adaption aux différentes largeurs des sacs, supporté de manière à pouvoir à être déplacé et fixé dans le dispositif d'avance de la feuille (13).

6. Dispositif suivant l'une des revendicaions 3 à 5, caractérisé en ce que la paroi externe du mandrin (24) est pourvue d'aplatissements (65) dans les zones voisines des passages (64).

7. Dispositif suivant l'une des revendications 3 à 6, caractérisé en ce que l'outil de fraisage (32) présente au moins deux couteaux (33) qui sont de préférence mutuellement diamétralement opposés et qui tournent le long de la paroi interne cylindrique de la cavité (31) du mandrin.

8. Dispositif suivant l'une des revendications 1 à 7, caractérisé en ce que, pour le guidage conjoint des deux feuilles (62, 63) à l'extrémité du dispositif de fraisage (16), des patins (18) sont prévus qui présentent des rainures dans la zone des baguettes de fermeture (11, 12).

9. Dispositif suivant l'une des revendications 1 à 8, caractérisé en ce que, pour la compression des deux feuilles (62, 63), il est prévu des rouleaux de pressage (69) sollicités par ressort sur le dispositif de fraisage.

10. Dispositif suivant l'une des revendications 2 à 9, caractérisé en ce que le dispositif d'actionnement présente un levier (53) qui est fixé sur le mandrin (24) et sur lequel agit un vérin pneumatique (68).

Fig.1.

Fig.2.

Fig.3.

_Fig.4._

Fig.5.

63

12

64

33

64

65

31

34

32

33

65

11

62

0005776

0005776

Fig.6.

17